# EUROPÄISCHE PATENTSCHRIFT

(11) **EP 0 528 754 B1**
(45) Veröffentlichungstag und Bekanntmachung des Hinweises auf die Patenterteilung: **05.06.1996**
(21) Anmeldenummer: 92810550.1
(22) Anmeldetag: 20.07.1992
(51) Int. Cl.: B65D 1/02, B29C 33/00, B29C 49/48

(54) **Verfahren und Blasform zur Herstellung einer Kunststoff-Flasche**
Process and apparatus for producing a plastic bottle
Procédé et appareil pour la réalisation d'une bouteille en plastique

(30) Priorität: 08.08.1991 CH 2347/91
(43) Veröffentlichungstag der Anmeldung: 24.02.1993
(73) Patentinhaber: DÜRING AG, CH-8108 Dällikon (CH)
(72) Erfinder: Düring, Walter, CH-8108 Dällikon (CH)
(74) Vertreter: Bosshard, Ernst

(56) Entgegenhaltungen:
- EP-A- 0 204 200
- EP-A- 0 355 437
- EP-A- 0 408 929
- US-A- 1 625 398
- US-A- 3 592 885

## Beschreibung

Die Erfindung bezieht sich auf ein Verfahren zur Herstellung einer Kunststoff-Flasche nach dem Oberbegriff des Patentanspruches 1.

Ferner bezieht sich die Erfindung auf eine Blasform gemäß Anspruch 2 und eine Kunststoff-Flasche gemäß Anspruch 3.

Aus der EP-A-408929 ist eine faltbare Kunststoff-Flasche bekannt mit einer sich im Bodenbereich befindlichen V-artigen Einbuchtung und mit einer am Einbuchtungsgrund vorhandenen Bodenfaltkante. Beim Schliessen der Blasform bildet sich im Bodenbereich eine Quetschnaht mit unvermeidlicher Materialverdickung. Wenn sich diese Materialverdickungen im Bereich der Bodenfaltkante befinden, wird das Falten erschwert oder verunmöglicht. Die Blasform-Trennebene wurde deshalb quer zur Bodenfaltkante verlegt. Dies erlaubt eine gute Faltbarkeit der Flasche im kritischen Bodenbereich, da die Verdickungen ausserhalb der Bodenfaltkante zu liegen kommen. Eine solche Verlegung der Blasform-Trennebene quer zur Bodenfaltkante ist bei Flaschen mit eingeformtem Griff indessen nicht möglich, da sonst die geblasene Flasche nicht mehr aus der Blasform ausgeformt werden könnte oder dies teure mehrteilige Spezialformen bedingen würde und Mehrfachformen nicht möglich wären.

Bei Kunststoff-Flaschen mit einer Blasform-Trennebene in der Flaschenlängsmittelebene entstehen bei Henkelflaschen zwei spiegelbildliche Hälften, wodurch die Entformung keine Schwierigkeiten bereitet. Dabei kommt aber die Bodenfaltkante in die Flaschenlängsmittelebene zu liegen.

Bei der Herstellung solcher Flaschen wird ein heissextrudierter Kunststoff-Schlauch von zwei Formhälften ergriffen und im Bodenbereich durch den Werkzeug-Schliessvorgang abgequetscht. Dabei bilden sich unvermeidlich an der Quetschnaht Materialansammlungen, die üblicherweise eine etwa halbmondförmige Gestalt haben. Im Verhältnis zur durchschnittlichen Flaschenwand-Dicke beträgt eine solche Materialverdickung ein Mehrfaches - beispielsweise bis zum sechsfachen - der Normalwandstärke. Diese beim Blasverfahren praktisch unvermeidlichen Materialansammlungen stören oder verunmöglichen eine Faltung des Bodens in der Flaschen-Längsmittelebene. Ein weiterer Nachteil besteht darin, dass diese Materialkonzentrationen im einwärts liegenden Teil des V-förmigen Flaschenbodens auftreten und somit diese Materialverdickungen nicht mithelfen können, die Form zur Stützung des Flaschengewichtes zu stabilisieren und die Standfestigkeit der Flasche zu verbessern.

Aus der EP-A-0 204 200 ist ein Verfahren und eine Vorrichtung zur Herstellung von Kunststoff-Hohlkörpern im Blasverfahren bekannt, wobei eine zweiteilige Blasform zur Verbesserung der Festigkeit der Naht an den Abquetschkanten eine Sägezahnform hat. Ein derartiger Hohlkörper ist nicht zum Falten geeignet.

Die Patentschrift EP-A-0 355 437 betrifft ein Verfahren und eine Vorrichtung zur Erzeugung eines geblasenen Hohlkörpers. Die Blasform ist im Bereich des Bodens in vier Teile aufgeteilt. Durch den symmetrischen Schliessdruck dieser Blasform-Teile wird eine Verbesserung der kreuzförmigen Boden-Nahtverbindung angestrebt.

Die US-A-3592885 Veröffentlichung zeigt die Ausbildung einer Boden-Quetschnaht für hohlzylindrische Blaskörper, die zick-zack- oder wellenförmig ausgebildet ist, wobei die Nahtbildung in einem gewissen Temperaturbereich erfolgt.

Aufgabe der Erfindung ist die Schaffung einer im Blasverfahren herzustellenden Kunststoff-Flasche mit Bodeneinbuchtung und Faltmöglichkeit in der Flaschenlängsmittelebene unter Vermeidung von Materialansammlungen in der Bodenfaltlinie und Trennbarkeit der Blasform zur Entformung der Flasche aus der Blasform entlang der Flaschenlängsmittelebene.

Diese Aufgabe wird durch die in den Patentansprüchen 1, 2 und 3 genannten Merkmale gelöst.

Dadurch gelingt es, die Faltkante des Bodens solcher Flaschen von unerwünschten Materialverdickungen frei zu halten und die durch das Blasverfahren bedingten, unvermeidlichen Verdickungen gegen den Rand hin zu verlagern, sodass der Standflächen-Bereich verstärkt wird, wodurch namentlich bei grossvolumigen Flaschen die Formstabilität der vollen Flaschen verbessert wird. Da die Blasform-Trennebene im Hals- und Mantelbereich unverändert in der Längsmittelebene bleibt, ist namentlich die Herstellung von Henkelgriff-Flaschen möglich. Die beiden unvermeidlich entstehenden, etwa halbmondförmigen Materialverstärkungen kommen seitlich der Bodenfaltkante zu liegen und behindern dadurch den Faltvorgang nicht.

In der Zeichnung sind Ausführungsbeispiele der Erfindung dargestellt. Es zeigen:
- Fig. 1: eine Flasche in perspektivischer Darstellung
- Fig. 2: eine Blasformhälfte zusammen mit einer Flasche in perspektivischer Darstellung
- Fig. 3: eine Ansicht auf den Flaschenboden
- Fig. 4: eine Ausführungsvariante mit Z-förmigen Form-Trennebenen im Bodenbereich
- Fig. 5: eine Flasche mit Henkelgriff in perspektivischer Darstellung
- Fig. 6: eine perspektivische Darstellung eines Blasformteiles zur Herstellung einer Z-förmigen Quetschnaht am Boden

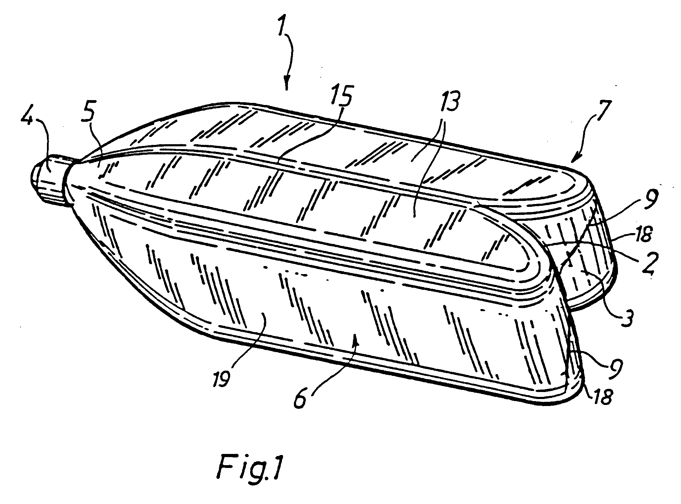

Fig. 1 zeigt eine Kunststoff-Flasche 1 mit einer V-artigen Einbuchtung 3 am Boden, an deren Einbuchtungsgrund sich eine Bodenfaltkante 2 befindet. In der Flaschenlängsmittelebene befinden sich Seitenfaltkanten 15 auf dem Grat von zwei je in einem stumpfen Winkel zusammenstossenden Seitenflächen 13. Die Bodenfaltkante 8 geht seitlich je in Form einer Rundung in die Seitenfaltkanten 15 über. Das bodenseitige Ende der V-förmigen Einbuchtung 3 geht in zwei die Standfläche bildende Rundungen 18 über, an welche sich die gewölbten Breitflächen 19 anschliessen. Durch Druck von Hand auf die Breitflächen 19 lässt sich die leere Flasche falten, wobei sich die Bodenfaltkante 2 nach einwärts bewegt und streckt, da sich die Seitenfaltkanten 15 nach auswärts bewegen, wie dies im Einzelnen aus EP-A-408929 hervorgeht. Die Flasche 1 ist mit einem dicht aufschraubbaren Deckel 4 versehen, sodass nach dem Falten der Flasche eine Rückfederung durch Einziehen von Luft verhindert werden kann. Im Gegensatz zu jener Ausführungsform verläuft hier jedoch die Blasform-Trennebene bei der vorliegenden Flasche im Bodenbereich schräg zur Bodenfaltkante 2.

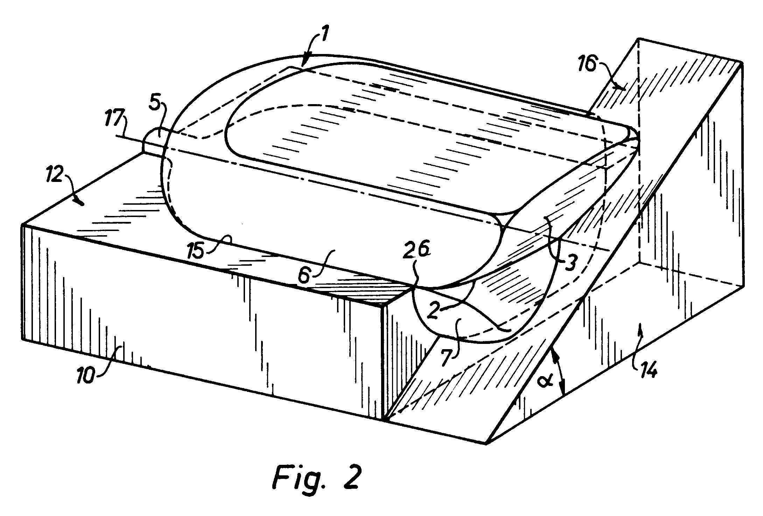

Aus Figur 2 geht die eine Formhälfte 10 einer Extrusions-Blasform hervor. Eine dem Flaschenhals 5 und dem Mantel 6 der Flasche zugeordnete erste Trennebene 12 verläuft in der Längsmittelebene der Flasche 1. Eine dem Bodenbereich 7 der Flasche zugeordnete zweite Trennebene 16 eines weiteren Formteiles 14 bildet zur ersten Trennebene 12 einen Winkel α, der vorzugsweise etwa 20-45° beträgt. Die beiden Formteile 10, 14 können entweder aus einem Stück oder aus zwei miteinander starr verbundenen Teilen bestehen. Die andere Hälfte der Blasform ist gegengleich ausgebildet. Die Ausdehnung des Blasformteiles 14 in Flaschenlängsrichtung erstreckt sich etwa bis zur Stelle 26, wo die Rundungen des Bodens und die Bodenfaltkante 2 absatzlos in die Seitenfaltkanten 15 übergehen.

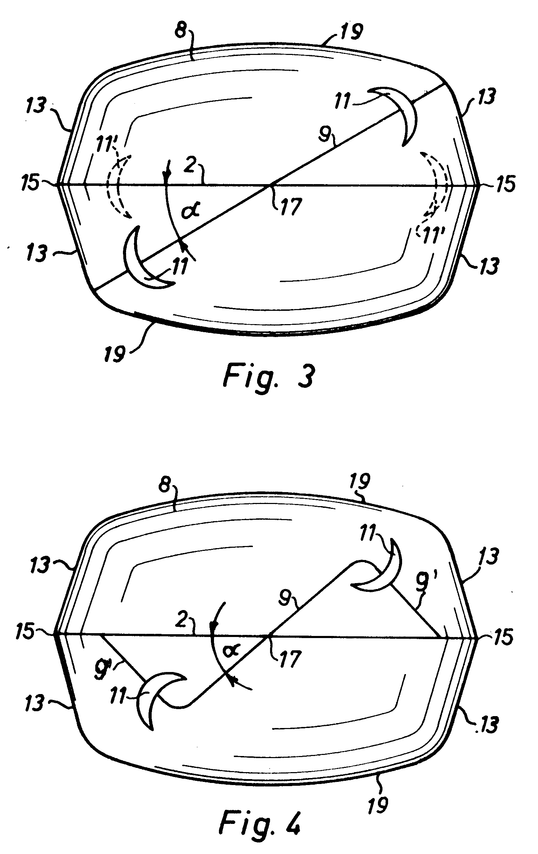

Aus Figur 3 geht die Lage der Trennebene am Flaschenboden 8 und damit die Lage der Quetschnaht 9 hervor. Bei dieser Flaschenform verläuft die Quetschnaht 9 schräg, vorzugsweise etwa diagonal zum Boden 8 und schneidet die Bodenfaltkante 2 etwa in der Mitte. Halbmondartige Material-Verdickungen 11 befinden sich ausserhalb der Faltkante 2 nahe am Ende der Quetschnaht 9 im Bereich der Standfläche. Wenn im Gegensatz hierzu die Form-Trennebene in konventioneller Weise durchgehend in der Flaschen-Längsmittelebene liegen würde, hätte dies zur Folge, dass die in unterbrochenen Linien dargestellten halbmondartigen Materialverdickungen 11' und die Quetschnaht mit der Bodenfaltkante 2 zusammenfallen würden, was die Faltung am Boden wegen der durch die starke Wandverdickung bewirkte Versteifung stark erschweren oder sogar verunmöglichen würde.

In Figur 4 ist eine Ausführungs-Variante dargestellt, bei welcher im Flaschenbodenbeieich die Trennebenen im wesentlichen eine Z-Form haben. Bereiche 9' der Z-förmigen Quetschnaht befinden sich bei der Bodenfaltkante 2. Die Formhälften können zur leichten Ausformung der geblasenen Flaschen weiter unterteilt sein.

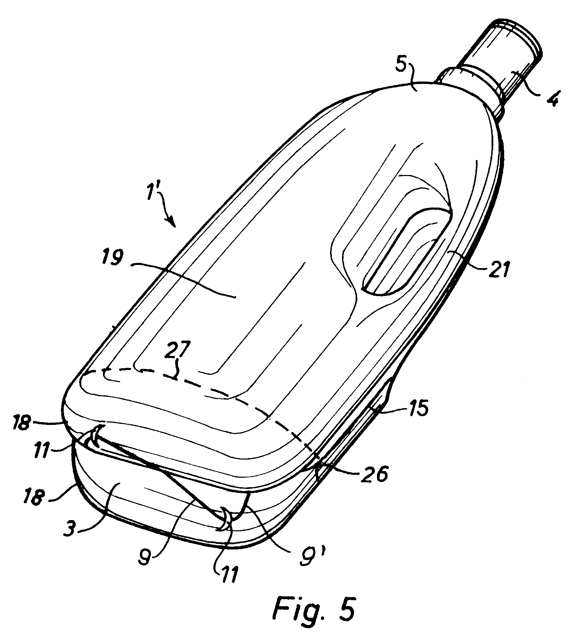

In Fig. 5 ist eine mit Henkelgriff 21 versehene Flasche 1' dargestellt. Auch diese Flasche lässt sich entlang der Längsmittelebene falten. Im Bodenbereich verläuft die Trennebene und damit die Quetschfalte 9 Z-förmig. In dem an den Bodenbereich anschliessenden Flaschenbereich - also im Mantel- und und Halsbereich - verläuft die Blasform-Trennebene in der Flaschenlängsmittelebene, wobei auch der Henkel- oder Griffteil in zwei spiegelbildliche Hälften geteilt wird. Die beiden durch den Herstellungsvorgang im Blasverfahren bedingten, etwa halbmondförmigen Materialverdickungen 11 befinden sich ausserhalb der Bodenfaltkante 2 angenähert im Bereich der Standfläche und bewirken eine verbesserte Formstabilität.

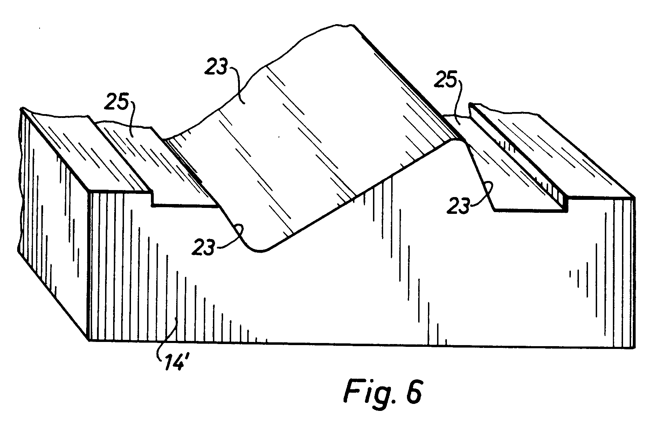

Fig. 6 zeigt einen Abschnitt des bodenseitigen Teils einer Blasformhälfte, wie er zur Herstellung einer Z-förmigen Quetschnaht im Bodenbereich einer Flasche gemäss Fig. 4 verwendet wird. Dieser Blasformteil 14' tritt an Stelle des Blasformteiles 14 in Fig.2. Statt einer geradlinigen Schrägfläche 16 sind nun bei Fig. 6 im Querschnitt Z-förmige Flächen 25 vorhanden, welche beidseitig in einen zur Auflagefläche 26 parallelen Bereich 25 übergehen. An diesen unvollständig dargestellten Blasformteil 14' schliesst sich der Blasformteil 12 an, wie es aus Fig. 2 hervorgeht. Die Ausdehnung des Blasformteiles 14 und 14' in Flaschenlängsrichtung erstreckt sich etwa bis zur Stelle 26 (Figur 2), wo die Rundungen des Bodens und die Bodenfaltkante 2 in die Seitenfaltkanten 15 übergehen und eine absatzlos verlaufende Naht 27 gebildet wird.

## Patentansprüche

1. Verfahren zur Herstellung einer im Querschnitt länglichen, faltbaren Kunststoff-Flasche (1) im Extrusions-Blasverfahren mittels einer teilbaren Blasform (10,16), wobei der Bodenteil der Flasche eine V-artige Einbuchtung (3) aufweist, in deren Einbuchtungsgrund sich eine in der Flaschenlängsmittelebene liegende Bodenfaltkante (2) befindet, dadurch gekennzeichnet, dass eine dem Hals- und Mantelbereich (5,6) zugeordnete erste Blasform-Trennebene (12) in der Flaschen-Längsmittelebene liegt, und dass zur Vermeidung von den Faltvorgang behindernden Materialverdickungen (11) auf der Bodenfaltkante (2) mindestens eine dem faltbaren Bodenbereich zugeordnete, zweite Blasform-Trennebene (16) gebildet wird, die zur Bodenfaltkante (2) schräg verläuft oder die in einem Mittenbereich zur Bodenfaltkante (2) schräg verläuft, wobei mit den sich daran anschliessenden Bereichen der zweiten Trennebene (16) eine Z-Form gebildet wird, dass die zweite Trennebene den Bodenbereich mit der V-artigen Flaschen-Einbuchtung umfasst und die imaginären Fortsetzungen mindestens der mittleren Teile dieser beiden Trennebenen (12,16) sich in der Längsmittelachse (17) der Flasche (1) schneiden oder angenähert schneiden.

2. Blasform zur Durchführung des Verfahrens nach Anspruch 1, dadurch gekennzeichnet, dass der den Hals- und Mantelbereich (5,6) der Flasche erzeugende Blasformteil (10) eine erste Blasform-Trennebene (12) hat, welche in der Flaschen-Längsmittelebene liegt und mindestens eine zweite Blasform-Trennebene (16) des Flaschenbodenbereiches zur erwähnten ersten Trennebene (12) einen spitzen Winkel (α) bildet oder ein Trennebenen-Mittelbereich der zweiten Trennebene zur erwähnten ersten Trennebene (12) einen spitzen Winkel (α) bildet und zusammen mit sich an den Trennebenen-Mittelbereich anschliessenden Bereichen (9') eine Z-Form bildet, wobei sich die zweite Trennebene (16) über einen V-artigen Formhohlraum im Bodenbereich zur Ausbildung der V-artigen Einbuchtung (3) der Flasche (1) erstreckt und imaginäre Fortsetzungen dieser Trennebenen (12,16) sich mindestens angenähert in der Flaschen-Längsmittelachse (17) schneiden.

3. Kunststoff-Flasche hergestellt nach dem Verfahren nach Anspruch 1, mit Seitenfaltkanten (15) und mit einer V-artigen Einbuchtung (3) im Bodenbereich und mit einer Bodenfaltkante (2) in der Flaschenlängsmittelebene, dadurch gekennzeichnet, dass eine von der Blasform-Trennebene herrührende Quetschnaht (9) im Bodenbereich (3) der Flasche (1) zur Bodenfaltkante (2) einen spitzen Winkel (α) bildet oder der mittlere Bereich der Quetschnaht (9) zusammen mit sich daran anschliessenden Bereichen der Quetschnaht (9') eine Z-Form bildet und die Quetschnaht sich im Bodenbereich über die V-artige Einbuchtung (3) erstreckt, und dass sich der mittlere Teil der Quetschnaht (9) und die Bodenfaltkante (2) mindestens angenähert in der Längsmittelachse (17) schneiden.

4. Kunststoff-Flasche nach Anspruch 3, dadurch gekennzeichnet, dass die Bereiche (9') der Z-förmigen Quetschnaht (9) mindestens angenähert bei der Bodenfaltkante (2) endigen.

5. Kunststoff-Flasche nach Anspruch 3, dadurch gekennzeichnet, dass die Quetschnaht in der Boden-Einbuchtung (3) in einem Winkel (α) von 20-45° zur Bodenfaltkante (2) verläuft.

## Claims

1. Method for producing a foldable plastic bottle (1), oblong in cross-section, by the extrusion blow-moulding method, by means of a divisible blow mould which can be separated (10, 16), the bottom part of the bottle having a V-shaped indentation (3), in the base of which indentation a bottom folding edge (2) can be found which lies in the longitudinal centre plane of the bottle, characterized in that a first blow-mould parting face (12) assigned to the neck and sleeve zone (5, 6) lies in the longitudinal centre plane of the bottle, and that, to avoid material thickenings (11) which impede the folding operation, on the bottom folding edge (2) at least one blow-mould parting face (16) assigned to the foldable bottom zone is formed, which tuns obliquely to the bottom folding edge (2), or which nuns obliquely in a central zone to the bottom folding edge (2), a Z-shape being formed with the zones of the second parting face (16) which connect to it, that the second parting face encloses the bottom zone with the V-shaped bottle-indentation, and the imaginary continuations at least of the central parts of these two parting faces (12, 16) intersect or approximately intersect in the longitudinal central axis (17) of the bottle (1).

2. Blow-mould for carrying out the method according to Claim 1, characterized in that the part (10) of the blow mould producing the neck and sleeve zone of the bottle has a first blow- mould parting face (12) which lies in the longitudinal centre plane of the bottle, and at least one second blow- mould parting face (16) of the bottom zone of the bottle forms an acute angle (α) or a parting-plane centre zone of the second parting face forms an acute angle (α) to the first parting face (12) mentioned, and together with zones (9') connecting to the parting-face centre zone forms a Z-shape, the second parting face (16) extending via a V-shaped mould cavity in the bottom zone to form the V-shaped indentation (3) of the bottle (1), and imaginary continuations of these parting faces (12, 16) intersect at least approximately in the longitudinal centre-axis (17) of the bottle.

3. Plastic bottle manufactured by the method according to Claim 1, with side fold edges (15) and with a V-shaped indentation (3) in the bottom zone and with a bottom folding edge (2) in the longitudinal centre plane of the bottle, characterized in that a crush seam (9) stemming from the blow-mould parting face in the bottom zone (3) of the bottle (1) forms an acute angle (α) to the bottom folding edge (2) or the centre zone of the crush seam (9) together with zones connecting to it of the crush seam (9') forms a Z-shape and the crush seam extends in the bottom zone via the V-shaped indentation (3), and that the central part of the crush seam (9) and the bottom folding edge (2) intersect at least approximately in the longitudinal centre axis (17).

4. Plastic bottle according to Claim 3, characterized in that the zones (9') of the Z-shaped crush seam (9) end at least approximately near the bottom folding edge (2).

5. Plastic bottle according to Claim 3, characterized in that the crush seam in the bottom indentation (3) runs at an angle (α) of 20-45° to the bottom folding edge (2).

## Revendications

1. Procédé de fabrication d'une bouteille (1) en matière plastique pliable de section transversale oblongue dans le procédé de soufflage d'extrusion au moyen d'un moule (10, 16) de soufflage qui peut être subdivisé en plusieurs parties, la région du fond de la bouteille comportant une échancrure (3) en forme de V dans la base de laquelle se trouve un bord (2) de pliage du fond se trouvant dans le plan longitudinal médian de la bouteille, caractérisé en ce qu'un premier plan (12) de joint du moule de soufflage, associé à la partie (5) du col et à la partie (6) latérale, se trouve dans le plan longitudinal médian de la bouteille, et que, afin d'empêcher que des épaississements (11) de matériau qui gênent l'opération de pliage, ne se trouvent sur le bord (2) de plage du fond, il est formé au moins un deuxième plan (16) de joint du moule de soufflage qui est associé à la région de pliage du fond et qui s'étend en bas par rapport au bord (2) de plage du fond ou qui s'étend dans une région médiane en biais par rapport au bord (2) de plage du fond, une forme en Z étant donnée par les régions du deuxième plan (16) de joint qui y font suite, en ce que le deuxième plan de joint englobe la région de fond comportant l'échancrure en forme de V de la bouteille et en ce que les prolongements imaginaires d'au moins les parties médiane de ces deux plans (12, 16) de joint se coupent sur l'axe (17) longitudinal médian de la bouteille (1) ou à proximité.

2. Moule de soufflage pour la mise en oeuvre du procédé de la revendication 1, caractérisé en ce que la partie (10) de moule de soufflage qui produit la région (5) de col et la région (6) latérale de la bouteille a un premier plan (12) de joint du moule de soufflage, qui se trouve dans le plan longitudinal médian de la bouteille et en ce qu'au moins un deuxième plan (16) de joint du moule de soufflage de la région du fond de la bouteille fait avec le premier plan (12) de joint mentionné un angle (α) aigu ou une région médiane du plan de joint fait avec le premier plan (12) de joint mentionné un angle (α) aigu et donne conjointement avec des parties (9') qui font suite à la région médiane du plan de joint une forme en Z, le deuxième plan (16) de joint s'étendant sur une cavité de moule en forme de V dans la région du fond afin de constituer l'échancrure (3) en forme de V de la bouteille (1) et des prolongements imaginaires de ces plans (12, 16) de joint se coupant au moins à proximité de l'axe (17) longitudinal médian de la bouteille.

3. Bouteille en matière plastique fabriquée suivant le procédé de la revendication 1, comportant des bords (15) de plage latéraux et une échancrure (3) en forme de V dans la région du fond et un bord (2) de plage de fond dans le plan longitudinal médian de la bouteille, caractérisée en ce qu'un cordon (9) d'écrasement, issu du plan de joint du moule de soufflage et prévu dans la région (3) du fond de la bouteille (1), fait avec le bord (2) de plage de fond un angle (α) aigu ou en ce que la région médiane du cordon (9) d'écrasement donne conjointement avec les régions qui y font suite du cordon (9') d'écrasement une forme en Z, le cordon d'écrasement s'étendant dans la région de fond sur l'échancrure (3) en forme de V, et en ce que la partie médiane du cordon (9) d'écrasement et le bord (2) de plage de fond se coupent au moins à proximité de l'axe (17) longitudinal médian de la bouteille.

4. Bouteille en matière plastique suivant la revendication 3, caractérisée en ce que les régions (9') du cordon (9) d'écrasement en forme de Z se terminent au moins à proximité du bord (2) de plage de fond.

5. Bouteille en matière plastique suivant la revendication 3, caractérisée en ce que le cordon d'écrasement s'étend dans l'échancrure (3) du fond en faisant un angle (α) de 20 à 45° avec le bord (2) de pliage de fond.
